# FASCICULE DE BREVET EUROPEEN

(11) **EP 0 408 429 B1**
(45) Date de publication et mention de la délivrance du brevet: **02.01.1997**
(21) Numéro de dépôt: 90401956.9
(22) Date de dépôt: 05.07.1990
(51) Int. Cl.: C08F 4/48, C08F 297/02

(54) **Copolymères triséquencés comportant au moins une séquence acrylique, un procédé pour leur préparation et leur application à la fabrication d'articles élastomères**
Dreiblockcopolymerisate, die mindestens einen Acrylblock enthalten, ein Verfahren zu ihrer Herstellung und ihre Verwendung zur Herstellung von elastomeren Erzeugnissen
Triblock copolymers containing at least one acrylic block, a process for their preparation and their application in the manufacture of elastomer products

(30) Priorité: 10.07.1989 FR 8909268; 27.11.1989 FR 8915581
(43) Date de publication de la demande: 16.01.1991
(73) Titulaire: ELF ATOCHEM S.A., 92800 Puteaux (FR)
(72) Inventeur: Varshney, Sunil K., B-4030 Liège (BE); Fayt, Roger, B-4121 Neupre (BE); Teyssie, Philippe, B-4121 Neuville en Condroz (BE); Hautekeer, Jean-Paul, B-4000 Liège (BE)
(74) Mandataire: Chaillot, Geneviève

(56) Documents cités:
- EP-A- 0 185 641
- EP-A- 0 274 318
- CHEMICAL ABSTRACTS, vol. 84, 1976, page 19, résumé no. 136297u, Columbus, Ohio, US; & JP-A-75 141 691
- C.D.DePorter et al., The Synthesis of Alkyl-Methacrylate Containing Triblock Copolymers and the Subsequent Introduction of Acidic and Ionic Functionalities, Polymer Preprints 29(1), 343-345
- Ullmanns Enzyklopädie der technischen Chemie, 4.Auflage,Verlag Chemie, Weinheim 1978, Band 15, 191-192
- Encyclopedia of Polymer Science and Engineering, Volume 2, Wiley-Interscience Publications, New York, 1985, 36-39

## Description

La présente invention se rapporte à de nouveaux copolymères triséquencés comportant au moins une séquence acrylique, et plus particulièrement à de tels copolymères obtenus par polymérisation anionique. La présente invention concerne également un procédé d'obtention de tels copolymères, et plus particulièrement un procédé permettant de contrôler leur polydispersité, ainsi que l'application de ces copolymères triséquencés à la fabrication d'articles élastomères.

On connaît déjà des copolymères triséquencés associant des blocs de méthacrylates d'alkyle de natures différentes. Ainsi, Polymer Preprints 29(1), pages 343-345, décrit des copolymères triséquencés (méthacrylate de terbutyle-b-méthacrylate de 2-éthylhexyle-b-méthacrylate de terbutyle) obtenus par polymérisation anionique dans le tétrahydrofuranne à -78°C en présence d'un initiateur difonctionnel. Par cette méthode, on obtient des copolymères séquencés pouvant comporter jusqu'à 20% en poids de méthacrylate de terbutyle mais possédant une distribution relativement large des poids moléculaires. D'autre part, l'association de différents méthacrylates dans un copolymère triséquencé de ce type ne paraît pas de nature, même après hydrolyse et/ou neutralisation subséquente des fonctions esters, à conférer à ce copolymère des propriétés le rendant apte à une application particulière. Par contre, l'association, dans un polymère triséquencé, de blocs acrylates et de blocs méthacrylates ou bien vinylaromatiques paraît susceptible, sous réserve d'une distribution étroite des poids moléculaires du copolymère, de procurer des propriétés intéressantes dans plusieurs types d'applications, et notamment pour la fabrication d'articles élastomères.

Le brevet US-A-3 287 298 décrit une classe de polymères convertibles à l'air à température ordinaire, c'est-à-dire de polymères fusibles et/ou solubles qui, par exposition à l'oxygène, sont convertis en polymères insolubles grâce à la présence de multiples groupes insaturés dans leurs structures. Cette classe comprend des copolymères à blocs de formule : 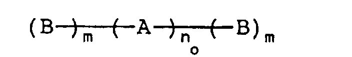 dans laquelle nₒ est un nombre entier au moins égal à 4, m est un nombre entier au moins égal à 1 et pouvant atteindre jusqu'à la valeur de nₒ,
- A est un monomère de formule 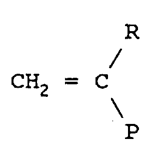 dans laquelle R est choisi parmi H, CH₃ et CN, et P peut être, parmi d'autres, un radical aryle ou un groupe CO₂R' dans lequel R' est choisi parmi les radicaux aromatiques, aliphatiques saturés et cycloaliphatiques saturés ayant jusqu'à 12 atomes de carbone, et
- B est un monomère de formule 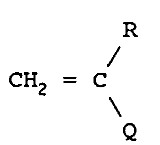 dans laquelle R est choisi parmi H, CH₃ et CN, et Q est un radical aliphatique insaturé contenant de 16 à 24 atomes de carbone.

Grâce à leur propriété de convertibilité à l'air, ces copolymères à blocs sont particulièrement utiles pour des applications de revêtement telles que vernis, peintures, etc.

Le problème que la présente invention vise à résoudre consiste à mettre au point un procédé de polymérisation pour obtenir des copolymères triséquencés comportant au moins une séquence acrylique et possédant une distribution étroite des poids moléculaires, susceptibles de posséder des propriétés permettant leur utilisation dans la fabrication d'articles élastomères. La présente invention est basée sur la découverte surprenante que ce but peut être atteint en associant, dans le système d'amorçage de la polymérisation anionique, l'initiateur à un ligand tel qu'un sel de métal alcalin ou alcalino-terreux, en conduisant la polymérisation de manière séquentielle et de préférence en sélectionnant les proportions relatives des monomères acryliques et non-acryliques mis en jeu.

Un premier objet de la présente invention consiste en un copolymère triséquencé possédant un poids moléculaire moyen en nombre allant de 3 000 à 300 000 environ et une polydispersité des poids moléculaires allant de 1,05 à 2,0 environ, de structure A-B-C dans laquelle le bloc A représente une séquence de monomère choisi parmi les classes des monomères méthacryliques, acryliques, vinylaromatiques et maléimides, le bloc B représente une séquence de monomère choisi parmi les classes des monomères méthacryliques, acryliques et vinylaromatiques, et le bloc C représente une séquence de monomère choisi parmi les classes des monomères méthacryliques, acryliques et maléimides, à la condition que ce bloc B dérive de monomères appartenant à une classe différente de celle des monomères formant les blocs A et C et qu'au moins un des blocs A, B ou C soit une séquence acrylique ou méthacrylique, B ne pouvant représenter une séquence vinylaromatique si A et C sont des séquences de monomères différents l'un de l'autre.

Par monomère vinylaromatique au sens de la présente invention, on entend un monomère aromatique à insaturation éthylénique tel que le styrène, le vinyltoluène, l'alphaméthylstyrène, le méthyl-4 styrène, le méthyl-3 styrène, le méthoxy-4 styrène, l'hydroxyméthyl-2 styrène, l'éthyl-4 styrène, l'éthoxy-4 styrène, le diméthyl-3,4 styrène, le chloro-2 styrène, le chloro-3 styrène, le chloro-4 méthyl-3 styrène, le tert. butyl-3 styrène, le dichloro-2,4 styrène, le dichloro-2,6 styrène et le vinyl-1 naphtalène.

Par monomère acrylique au sens de la présente invention, on entend un monomère choisi parmi l'acide acrylique, les acrylates alcalins, l'acrylonitrile, les dialkylacrylamides et les acrylates de formule CH₂=CH-CO₂R dans laquelle R est choisi parmi les radicaux aryles, alcoxyalkyles, alkylthioalkyles, alkyles linéaires ou ramifiés (primaires, secondaires ou tertiaires) et cycloalkyles ayant de 1 à 18 atomes de carbone, le cas échéant substitués par un ou plusieurs atomes d'halogène. Comme exemples de tels acrylates on peut citer notamment ceux de méthyle, d'éthyle, de n-propyle, d'isopropyle, de n-butyle, de sec-butyle, de tertiobutyle, d'hexyle, de 2-éthylhexyle, d'isooctyle, de 3,3,5-triméthylhexyle, de lauryle, de stéaryle, de cyclohexyle, de phényle, d'isobornyle, de méthoxyméthyle, de méthoxyéthyle, d'éthoxyméthyle et d'éthoxyéthyle.

Par monomère méthacrylique au sens de la présente invention, on entend un monomère choisi parmi l'acide méthacrylique, les méthacrylates alcalins, le méthacrylonitrile, les dialkylméthacrylamides et les méthacrylates de formule 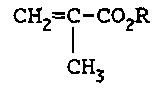 dans laquelle R est défini comme précédemment. Comme exemples de tels méthacrylates on peut citer notamment ceux de méthyle, d'éthyle, de 2,2,2-trifluoroéthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de benzyle et de norbornyle.

Par maléimide au sens de la présente invention on entend de préférence une maléimide N-substituée de formule : 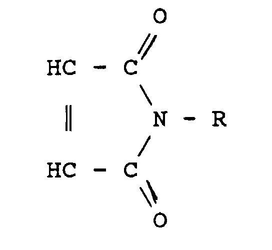 dans laquelle R est un radical alkyle, arylalkyle, aryle ou alkylaryle ayant de 1 à 12 atomes de carbone. Des exemples de telles molécules sont notamment la N-éthylmaléimide, la N-isopropylmaléimide, la N-n-butylmaléimide, la N-isobutylmaléimide, la N-terbutylmaléimide, la N-n-octylmaléimide, la N-cyclohexylmaléimide, la N-benzylmaléimide et la N-phénylmaléimide.

Dans les copolymères triséquencés selon l'invention, les blocs A et C peuvent être choisis dans une même classe de monomères, toujours à la condition que celle-ci soit différente de la classe de monomères constituant le bloc B. Ainsi, parmi les copolymères séquencés selon l'invention, on trouve les familles suivantes :
- méthacrylique-b-acrylique-b-méthacrylique,
- acrylique-b-vinylaromatique-b-acrylique,
- méthacrylique-b-vinylaromatique-b-méthacrylique,
- vinylaromatique-b-acrylique-b-méthacrylique,
- vinylaromatique-b-méthacrylique-b-acrylique,
- acrylique-b-méthacrylique-b-acrylique,
- maléimide-b-acrylique-b-maléimide, et
- maléimide-b-méthacrylique-b-maléimide.

Dans les copolymères triséquencés selon l'invention, les blocs A et B situés aux extrémités de chaînes peuvent être des blocs oligomères, c'est-à-dire constitués d'un très faible nombre (par exemple aussi faible que 3) d'unités du monomère de la classe considérée. Ils peuvent aussi être constitués d'un grand nombre de telles unités et posséder alors un poids moléculaire de plusieurs dizaines de milliers. Lorsque les blocs A et C sont de nature identique, ils peuvent être constitués du même nombre d'unités récurrentes du monomère considéré particulièrement lorsqu'ils sont préparés par le procédé ci-après désigné comme le "second procédé". Dans ce dernier cas, le bloc central B peut couramment représenter de 10 à 99% environ en poids du copolymère total. Lorsque les copolymères triséquencés selon l'invention doivent être utilisés dans la fabrication d'articles élastomères, il est préférable que le bloc central B soit constitué d'un monomère mou tel qu'un monomère acrylique et plus particulièrement un acrylate d'alkyle primaire ou d'alcoxyalkyle, que les blocs terminaux A soient constitués d'un monomère dur tel qu'un monomère méthacrylique et que le bloc central B représente de 50 à 85% environ en poids du copolymère total.

Les copolymères triséquencés selon l'invention peuvent être obtenus par un premier procédé caractérisé en ce que :
(1) on conduit une polymérisation anionique d'au moins un monomère A, à l'aide d'un système initiateur constitué par au moins un amorceur monofonctionnel de formule :

   (R)ₚ-M (I)

   dans laquelle :
   - M désigne un métal alcalin ou alcalino-terreux,
   - p désigne la valence du métal M, et
   - R désigne un radical alkyle à chaîne droite ou ramifiée contenant 2 à 6 atomes de carbone, ou un radical alkyle contenant 1 à 6 atomes de carbone substitué par au moins un groupe phényle,
   et au moins un ligand choisi parmi les sels minéraux de métaux alcalins ou alcalino-terreux et les sels organiques des métaux alcalins, ces derniers étant choisis parmi les alcoolates, les esters d'acides carboxyliques substitués en position a par ledit métal et les composés dans lesquels ledit métal est associé à un groupe choisi parmi :
   (A) les groupes de formule : 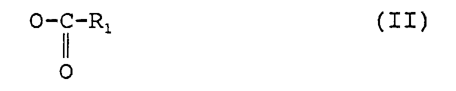 dans laquelle R₁ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,
   (B) les groupes de formule : 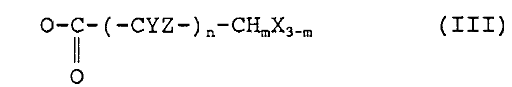 dans laquelle :
      - Y et Z, identiques ou différents l'un de l'autre, sont choisis parmi l'atome d'hydrogène et les atomes d'halogène ;
      - n est un nombre entier allant de 0 à 4,
      - X est un atome d'halogène, et
      - m est un nombre entier allant de 0 à 2,
   (C) les groupes de formule :

      O-SO₂-CT₃ (IV)

      dans laquelle T est choisi parmi l'atome d'hydrogène et les atomes d'halogène, et
   (D) les groupes de formule :

      B(R₂)₄ (V)

      dans laquelle R₂ est choisi parmi l'atome d'hydrogène et les radicaux alkyle et aryle,
   pour obtenir un chaînon vivant A⁻ puis
(2) on fait réagir ledit chaînon vivant avec au moins un monomère B pour obtenir un copolymère biséquencé vivant (A-B)⁻, puis
(3) on fait réagir ledit copolymère (A-B)⁻ avec au moins un monomère C pour former un copolymère triséquencé vivant (A-B-C)⁻, et enfin
(4) on fait réagir le copolymère (A-B-C)⁻ avec au moins un composé protolytique,
les étapes de polymérisation (1) à (3) étant effectuées en l'absence substantielle d'humidité et d'oxygène, un monomère vinylaromatique ne pouvant dans ce cas n'être engagé qu'en tant que monomère A.

A titre d'exemple ce premier objet peut être mis en oeuvre de manière simple en plaçant le système initiateur - constitué de l'amorceur monofonctionnel et du ligand - dans un réacteur puis en introduisant dans ledit réacteur successivement le monomère A, le monomère B et le monomère C, chaque étape de polymérisation précédant l'introduction du monomère suivant, et enfin en terminant la polymérisation par l'addition d'un composé protolytique.

Les amorceurs de formule (I) utilisés à l'étape (1) sont, par exemple, le sec.-butyllithium, le n-butyllithium et l'alphaméthylstyryllithium, le 1,1-diphénylhexyllithium, le diphénylméthyllithium ou sodium ou potassium et le 1,1-diphényl-3-méthylphényllithium. Le ligand peut être choisi parmi, d'une part, les sels minéraux de métaux alcalins ou alcalino-terreux par exemple, les chlorures, fluorures, bromures, iodures, borures, sulfates, nitrates et borates, et, d'autre part, les sels organiques de métaux alcalins, comme par exemple les alcoolates, les esters d'acides carboxyliques substitués en position α par ledit métal et les composés dans lesquels ledit métal est associé à un groupe tel que (A), (B), (C) ou (D), comme défini ci-dessus.

Des exemples de groupes de formule (II) sont les groupes acétate, propionate et benzoate. Des exemples de groupes de formule (III) sont les groupes α-bromoacétate et trifluoroacétate. Des exemples de groupes de formule (IV) sont les groupes trifluorométhane sulfonique et méthanesulfonique. Des exemples de groupe (V) sont les groupes borohydrure et tétraphénylborure.

Lorsque les blocs A et C sont de nature identique, les copolymères triséquencés selon l'invention peuvent également être obtenus par un second procédé caractérisé en ce que :
(1) on effectue la polymérisation anionique d'au moins un monomère B à l'aide d'un système initiateur constitué par au moins un amorceur bifonctionnel et au moins un ligand choisi parmi les sels minéraux de métaux alcalins ou alcalino-terreux et les sels organiques des métaux alcalins, ces derniers étant choisis parmi les alcoolates, les esters d'acides carboxyliques substitués en position α par ledit métal et les composés dans lesquels ledit métal est associé à un groupe tel que (A), (B), (C) ou (D) comme défini ci-dessus, pour obtenir un polymère vivant ⁻B⁻, puis
(2) on fait réagir ledit polymère ⁻B⁻ avec au moins un monomère A pour former un copolymère triséquencé vivant ⁻(A-B-A)⁻, et enfin
(3) on fait réagir le copolymère ⁻(A-B-A)⁻ avec au moins un composé protolytique,
les étapes de polymérisation (1) et (2) étant effectuées en l'absence substantielle d'humidité et d'oxygène, un monomère vinylaromatique ne pouvant dans ce cas n'être engagé qu'en tant que monomère B.

Ce second procédé peut être mis en oeuvre de manière simple en plaçant le système initiateur - constitué de l'amorceur bifonctionnel et du ligand - dans un réacteur puis en introduisant successivement le monomère B et, après l'étape de polymérisation de ce dernier, le monomère A et enfin en terminant la polymérisation par l'addition d'un composé protolytique.

Les amorceurs bifonctionnels utilisés à l'étape (1) peuvent être notamment des composés tels que le 1,4-dilithio-1,1,4,4-tétraphénylbutane, le 1,4-disodio 1,1,4,4-tétraphénylbutane, le naphtalène sodium et le naphtalène lithium.

On décrira maintenant les aspects particuliers de l'obtention des copolymères triséquencés selon l'invention qui sont communs au premier procédé et au second procédé.

La durée de chaque étape de polymérisation, variable selon la nature du monomère à polymériser et selon la température de polymérisation choisie, est généralement comprise entre 3 et 150 minutes environ. La proportion de ligand utilisé par rapport à l'amorceur peut varier fortement, notamment en fonction de la nature du ligand et de la nature de l'amorceur. Cette quantité peut être, par exemple, largement excédentaire par rapport à la quantité molaire d'agent amorceur. Cette quantité peut aussi être égale ou inférieure à la quantité molaire d'agent amorceur. De préférence, le ligand est introduit dans une proportion molaire vis-à-vis de l'amorceur allant de 0,3 jusqu'à 25 environ, et de préférence allant de 2 jusqu'à 15 environ.

Les différentes étapes de polymérisation s'effectuent en l'absence d'humidité et d'oxygène, et de préférence en présence d'au moins un solvant choisi, de préférence, parmi les solvants aromatiques, tels que le benzène et le toluène, ou bien le tétrahydrofuranne, le diglyme, le tétraglyme, l'orthoterphényle, le biphényle, la décaline, la tétraline ou le diméthylformamide. Enfin la température de polymérisation, qui peut varier d'une étape à l'autre, est généralement comprise entre -80°C et +20°C environ et peut même atteindre jusqu'à +60°C lorsqu'un alcoolate alcalin est utilisé comme ligand pour la polymérisation du méthacrylate de méthyle.

Les copolymères triséquencés selon l'invention comportant au moins un bloc d'acide acrylique ou méthacrylique peuvent être obtenus en préparant d'abord le copolymère triséquencé comportant le(s) bloc(s) correspondant(s) de (méth)acrylate de formule CH₂=CR¹-CO₂R - dans laquelle R est défini comme précédemment et R¹ est choisi parmi l'atome d'hydrogène et le radical méthyle par l'un ou l'autre des procédés décrits précédemment puis en hydrolysant le copolymère triséquencé ainsi préparé à une température allant de 70° à 170°C environ, sous une pression allant de 1 à 15 bars et en présence de 0,5 à 10% environ en poids, par rapport au copolymère, d'un catalyseur acide tel que l'acide paratoluène sulfonique, l'acide méthane toluène sulfonique ou l'acide chlorhydrique, dans un solvant polaire tel que le dioxanne. Après hydrolyse, les copolymères triséquencés comportant des séquences d'acide acrylique et/ou méthacrylique peuvent être précipités dans l'heptane, filtrés, lavés pour éliminer toute trace de catalyseur et finement séchés. Ils peuvent aussi être ultérieurement neutralisés au moyen de potasse méthanolique ou encore de tétraméthylammonium hydroxyde en solution dans un mélange de toluène et de méthanol afin de former les ionomères triséquencés correspondants, comportant au moins un bloc de (méth)acrylate alcalin.

Lorsque la polymérisation d'une séquence monomère s'avère délicate, ce qui peut être notamment le cas pour une séquence d'acrylate d'alkyle primaire en présence de certains systèmes initiateurs, il est également possible de préparer d'abord un copolymère triséquencé comportant le bloc correspondant d'un autre acrylate puis de le soumettre à une étape de transestérification par toute méthode connue pour cette réaction.

Le composé protolytique ajouté en fin d'étape de polymérisation de l'un ou l'autre des procédés décrits précédemment pour terminer la polymérisation peut être choisi notamment parmi l'eau, les alcools, les acides et les amines.

La plupart des copolymères triséquencés selon l'invention exhibent des propriétés remarquables. Ainsi, des copolymères (acrylique-b-vinylaromatique-b-acrylique) possèdent des températures de transition vitreuse T_{g} allant de 100° à 110°C. Des copolymères (acide acrylique-b-styrène-b-acide acrylique) montrent une température de transition vitreuse aussi élevée que 125°C, tandis que des copolymères (acrylate de sodium-b-styrène-b-acrylate de sodium) montrent une température de transition vitreuse aussi élevée que 160°C. Enfin des copolymères (méthacrylate de méthyle-acrylate d'alkyle ou d'alcoxyalkyle-méthacrylate de méthyle) comprenant de 50 à 85% en poids d'acrylate possèdent un allongement à la rupture (déterminé selon la norme ASTM D-1708) au moins égal à 500% et/ou une contrainte à la rupture au moins égale à 4 MPa.

Les exemples suivants sont donnés à titre illustratif et non-limitatif de la présente invention.

Dans tous ces exemples, la chromatographie d'exclusion a été effectuée en utilisant un appareil WATERS GPC 501 équipé de deux colonnes linéaires, avec le tétrahydrofuranne comme éluant à un débit de 1 ml/min. Les masses moléculaires moyennes en nombre ont été déterminées au moyen d'un osmomètre à membrane HP 502.

### EXEMPLE 1

Dans un ballon préalablement séché et sous atmosphère d'azote, on introduit 7.10⁻³ mole de chlorure de lithium préalablement purifié et conservé en l'absence de lumière. On y ajoute 200 ml de tétrahydrofuranne préséché et, sous agitation 0,7.10⁻³ mole de naphtalène lithium. On porte le mélange à la température de -78°C au moyen d'un mélange d'acétone et de carboglace puis on ajoute une solution de 5 g d'acrylate de tertiobutyle dans le toluène, puis une solution de 4 g de méthacrylate de méthyle dans le toluène. Les solvants et monomères sont purifiés par les techniques habituelles de la polymérisation anionique ; en particulier, l'acrylate et le méthacrylate sont traités successivement par l'hydrure de calcium et le triéthylaluminium. La polymérisation est stoppée par l'addition de quelques millilitres de méthanol. On obtient avec un rendement de 98% un copolymère triséquencé possédant les caractéristiques suivantes :

| | |
|---|---|
| Mn (acrylate) = | 16 400 |
| Mn (méthacrylate) = | 13 600 |
| Mw/Mn (copolymère total) = | 1,6 |

### EXEMPLE 2

On reproduit la procédure expérimentale de l'exemple 1 en modifiant les ingrédients comme suit :

| | |
|---|---|
| naphtalène lithium | 1,05.10⁻³ mole |
| chlorure de lithium | 10,5.10⁻³ mole |
| acrylate de tertiobutyle | 35 g |
| méthacrylate de méthyle | 13 g |
| tétrahydrofuranne | 1000 ml |

Dans ces conditions, on obtient avec un rendement de 99% un copolymère triséquencé possédant les caractéristiques suivantes :

| | |
|---|---|
| Mn (acrylate) = | 94 000 |
| Mn (méthacrylate) = | 21 000 |
| Mw/Mn (copolymère total) = | 1,28 |

### EXEMPLE 3

On reproduit la procédure expérimentale de l'exemple 1 tout en modifiant les conditions et ingrédients comme suit :

| | |
|---|---|
| 1,4-dilithio-1,1,4,4-tétraphénylbutane : | 0,5.10⁻³ mole |
| tertiobutanolate de lithium : | 5.10⁻³ mole |
| méthacrylate de méthyle : | 4,7 g |
| acrylate de 2-éthylhexyle : | 8,8 g |

La durée de polymérisation de la première étape est de 30 minutes, celle de la seconde étape de 60 minutes. Dans ces conditions on obtient avec un rendement de 90% un copolymère triséquencé (acrylate-b-méthacrylate-b-acrylate) possédant les caractéristiques suivantes :

| | |
|---|---|
| Mₙ (méthacrylate) = | 36 000 |
| Mₙ (acrylate) = | 32 000 |
| M_{w}/Mₙ (copolymère total) = | 2,0 |

### EXEMPLE 4

On reproduit la procédure expérimentale de l'exemple 1 tout en modifiant les ingrédients comme suit :

| | |
|---|---|
| diphénylméthylsodium (amorceur) : | 0,2.10⁻³ mole |
| tétrahydrofuranne : | 30 ml |
| toluène : | 120 ml |
| température de polymérisation : | -20°C |
| tertiobutanolate de sodium (ligand) : | 1,2.10⁻³ mole |
| acrylate de tertiobutyle : | 4,5 g |
| méthacrylate de méthyle : | 5 g |

Les durées de polymérisation des deux étapes sont successivement de 5 et 30 minutes.

Dans ces conditions, on obtient avec un rendement de 92% un copolymère triséquencé possédant les caractéristiques suivantes :

| | |
|---|---|
| Mn (acrylate) = | 32 500 |
| Mn (méthacrylate) = | 8 000 |
| Mw/Mn (copolymère total) = | 1,75 |

### EXEMPLE 5

On reproduit la procédure expérimentale de l'exemple 1 tout en modifiant les ingrédients comme suit :

| | |
|---|---|
| 1,4-dilithio-1,1,4,4-tétraphénylbutane : | 0,3.10⁻³ mole |
| chlorure de lithium : | 1,6.10⁻³ mole |
| tétrahydrofuranne : | 1500 ml |
| acrylate de tertiobutyle : | 50 g |
| méthacrylate de méthyle : | 50 g |

Dans ces conditions, on obtient un copolymère triséquencé possédant les caractéristiques suivantes :

| | |
|---|---|
| Mn (acrylate) = | 150 000 |
| Mn (méthacrylate) = | 90 000 |
| Mw/Mn (copolymère total) = | 1,2 |

### EXEMPLE 6

Par le procédé en trois étapes décrit dans la partie générale de la présente description, en utilisant le sec.-butyllithium comme amorceur monofonctionnel et le chlorure de lithium comme ligand dans un rapport molaire égal à 10 par rapport à l'amorceur, on prépare quantitativement un copolymère triséquencé poly(styrène-b-acrylate de n-butyle-b-méthacrylate de méthyle) possédant les caractéristiques suivantes :

| | |
|---|---|
| Mn (styrène) = | 24 000 |
| Mn (acrylate) = | 79 000 |
| Mn (méthacrylate) = | 27 000 |

L'allongement à la rupture de ce copolymère, déterminé à partir de la courbe contrainte-allongement pour une vitesse de traction de 2 cm/min. sur des échantillons moulés, est égal à 560%.

### EXEMPLE 7

On reproduit la procédure expérimentale de l'exemple 1, si ce n'est que le styrène introduit en premier remplace l'acrylate et que l'acrylate de tertio-butyle introduit en second remplace le méthacrylate de méthyle. Les ingrédients sont modifiés comme suit :

| | |
|---|---|
| naphtalène lithium : | 0,25.10⁻³ mole |
| chlorure de lithium : | 1,25.10⁻³ mole |
| acrylate de tertiobutyle : | 19 g |
| styrène : | 5 g |

Les durées de polymérisation des deux étapes sont successivement de 30 minutes et 15 minutes.

Dans ces conditions, on obtient avec un rendement de 100% un copolymère triséquencé possédant les caractéristiques suivantes :

| | |
|---|---|
| Mn (styrène) = | 36 000 |
| Mn (acrylate de tertiobutyle) = | 109 000 |
| Mw/Mn (copolymère total) | 1,13 |

### EXEMPLE 8

On reproduit la procédure expérimentale de l'exemple 7, en modifiant les ingrédients comme suit :

| | |
|---|---|
| naphtalène lithium : | 0,44.10⁻³ mole |
| chlorure de lithium : | 2,2.10⁻³ mole |
| acrylate de tertiobutyle : | 0,3 g |
| styrène : | 5 g |

Dans ces conditions, on obtient avec un rendement de 100% un copolymère triséquencé possédant les caractéristiques suivantes :

| | |
|---|---|
| Mn (styrène) = | 23 000 |
| Mn (acrylate de tertiobutyle) = | 1 500 |
| Mw/Mn (copolymère total) = | 1,10 |
| Tg = 104°C | |

### EXEMPLES 9 à 14

En suivant la procédure expérimentale des exemples 7 et 8 et en ajustant les quantités des ingrédients, le rapport molaire du chlorure de lithium au naphtalène lithium étant toujours égal à 5, on prépare les copolymères triséquencés (acrylate de tertiobutyle-b-styrène-b-acrylate de tertiobutyle) dont les caractéristiques figurent au tableau I ci-après.

**TABLEAU I**

| Exemple | Mₙ (styrène) | Mₙ (acrylate) | M_{w}/Mₙ | Tg (°C) |
|---|---|---|---|---|
| 9 | 26 000 | 56 000 | 1,2 | 107 |
| 10 | 90 000 | 16 000 | 1,2 | 107,5 |
| 11 | 89 200 | 10 800 | 1,2 | 107 |
| 12 | 92 800 | 2 600 | 1,2 | 107,5 |
| 13 | 23 800 | 1 200 | 1,2 | 104 |
| 14 | 34 400 | 600 | 1,15 | 104 |

### EXEMPLES 15 à 17 : Hydrolyse des copolymères des Exemples 9 à11

Les copolymères triséquencés des exemples 9 à 11 respectivement sont dissous dans 20 fois leur poids de toluène. La solution, à laquelle on ajoute de l'acide paratoluènesulfonique à raisons de 5% en moles par rapport à l'acrylate de tertiobutyle, est chauffée à 100°C pendant 8 heures. Les copolymères hydrolysés obtenus sont alors précipités dans l'heptane, filtrés, lavés plusieurs fois pour éliminer toute trace de catalyseur puis séchés dans le benzène. Le taux d'hydrolyse a été déterminé par titration potentiométrique acido-basique dans un mélange comprenant 90% de toluène et 10% de méthanol. Les taux d'hydrolyse mesurés sont respectivement de 100% (exemple 15), 97,5% (exemple 16) et 96% (exemple 17).

### EXEMPLE 18

En suivant la procédure expérimentale de l'exemple 1, l'initiateur étant un mélange de naphtalène et d'alphaméthylstyryllithium et le ligand du chlorure de lithium dans un rapport molaire égal à 10 par rapport à l'initiateur, la température initiale étant de -70°C pour atteindre -55°C pendant la seconde étape de polymérisation, on prépare avec un rendement de 100% un copolymère (méthacrylate de méthyle-b-acrylate de tertiobutyle-b-méthacrylate de méthyle) ayant les caractéristiques suivantes :

| | |
|---|---|
| Mn (acrylate) = | 83 200 |
| Mn (méthacrylate) = | 13 300 |
| Mw/Mn (copolymère total) = | 1,3 |

### EXEMPLE 19 : Transestérification du copolymère de l'Exemple 18

Le copolymère de l'exemple 18 est dissous dans 4,5 fois son poids de toluène. A cette solution on ajoute de l'acide paratoluènesulfonique à raison de 5% en moles par rapport à l'acrylate de tertiobutyle puis du méthoxyéthanol dans un rapport molaire égal à 3 par rapport à l'acrylate de tertiobutyle. Le mélange est alors chauffé pendant 24 heures à 100°C. Le copolymère (méthacrylate de méthyle-b-acrylate de méthoxyéthyle-b-méthacrylate de méthyle) obtenu est alors précipité deux fois dans un mélange de 80 parties de méthanol et de 20 parties d'eau et stabilisé au moyen d'un agent anti-oxydant. Un échantillon de ce copolymère est alors calandré pendant 10 minutes à 120°C puis moulé pendant 10 minutes par compression à 120°C sous 150 bars. Sur cet échantillon on mesure l'allongement à la rupture selon la norme ASTM D-1708, qui est égal à 710%.

### EXEMPLE 20

En suivant la procédure expérimentale de l'exemple 18, sauf la température initiale (-66°C) et celle de la seconde étape de polymérisation (-47°C), on prépare avec un rendement de 100% un copolymère (méthacrylate de méthyle-b-acrylate de tertiobutyle-b-méthacrylate de méthyle) ayant les caractéristiques suivantes :

| | |
|---|---|
| Mn (acrylate) = | 61 800 |
| Mn (méthacrylate) = | 39 900 |
| Mw/Mn (copolymère total) = | 1,4 |

### EXEMPLES 21 et 22 : Transestérification du copolymère de l'Exemple 20

Le copolymère de l'exemple 20 est soumis au processus de transestérification de l'exemple 19, l'alcool étant le n-butanol (exemple 21) ou bien le méthoxyéthanol (exemple 22). Sur les échantillons calandrés puis moulés par compression comme à l'exemple 19, on mesure la contrainte à la rupture. Celle-ci est égale à :
- 4,3 MPa pour l'exemple 21, et
- 6,7 MPa pour l'exemple 22.

### EXEMPLE 23

En suivant la procédure expérimentale de l'exemple 1 et en introduisant successivement l'acrylate de tertiobutyle puis le N-cyclohexylmaléimide, on effectue à -78°C la copolymérisation séquencée de ces monomères (la durée de chaque étape étant respectivement de 15 et 120 minutes) dans les conditions suivantes :

| | |
|---|---|
| naphtalène lithium | = 2,5.10⁻³ mole |
| chlorure de lithium | = 2,5.10⁻² mole |
| acrylate de tertiobutyle | = 5,3 g |
| N-cyclohexylmaléimide | = 4,5 g |
| tétrahydrofuranne | = 100 ml |

Les caractéristiques du polymère triséquencé obtenu figurent au tableau II ci-après.

### EXEMPLE 24

On reproduit la procédure expérimentale de l'exemple 23 en remplaçant seulement le naphtalène lithium par 3,4.10⁻³ mole de naphtalène sodium. Les caractéristiques du polymère triséquencé obtenu figurent au tableau II ci-après.

### EXEMPLE 25

On reproduit la procédure expérimentale de l'exemple 23 tout en modifiant les proportions des ingrédients comme suit :

| | |
|---|---|
| naphtalène lithium = | 0,5.10⁻³ mole |
| chlorure de lithium = | 0,5.10⁻² mole |
| acrylate de tertiobutyle = | 4,5 g |
| N-cyclohexylmaléimide = | 5,0 g |
| tétrahydrofuranne = | 100 ml |

Les caractéristiques du polymère triséquencé obtenu figurent au tableau II ci-après.

### EXEMPLE 26

On reproduit la procédure expérimentale de l'exemple 25 en remplaçant seulement le naphtalène lithium par la même quantité de naphtalène sodium. Les caractéristiques du copolymère triséquencé obtenu figurent au tableau II ci-après.

**TABLEAU II**

| Exemple | 23 | 24 | 25 | 26 |
|---|---|---|---|---|
| rendement (%) | 100 | 89 | 93 | 85 |
| Mn (acrylate) | 4900 | 2800 | 33000 | 48000 |
| Mn (maléimide) | 2300 | 1100 | 17000 | 14000 |
| Mw/Mn (copolymère total) | 1,23 | 1,26 | 1,18 | 1,21 |

## Revendications (Revendications pour l'(les) Etat(s) contractant(s) suivant(s): AT, BE, CH, DE, DK, FR, GB, GR, IT, LI, LU, NL, SE)

1. Copolymère triséquencé possédant un poids moléculaire moyen en nombre allant de 3 000 à 300 000 et une polydispersité des poids moléculaires allant de 1,05 à 2,0, de structure A-B-C dans laquelle le bloc A représente une séquence de monomère choisi parmi les classes des monomères méthacryliques, acryliques, vinylaromatiques et maléimides, le bloc B représente une séquence de monomère choisi parmi les classes des monomères méthacryliques, acryliques et vinylaromatiques, et le bloc C représente une séquence de monomère choisi parmi les classes des monomères méthacryliques, acryliques et maléimides, à la condition que ce bloc B dérive de monomères appartenant à une classe différente de celle des monomères formant les blocs A et C et qu'au moins un des blocs A, B ou C soit une séquence acrylique ou méthacrylique, B ne pouvant représenter une séquence vinylaromatique si A et C sont des séquences de monomères différents l'un de l'autre.

2. Copolymère triséquencé selon la revendication 1, caractérisé en ce que les blocs A et C sont de nature identique.

3. Copolymère triséquencé selon la revendication 2, caractérisé en ce que le bloc central B représente de 10 à 99% en poids du copolymère total.

4. Copolymère triséquencé selon la revendication 3, caractérisé en ce que le bloc central B est constitué d'un monomère acrylique, les blocs terminaux A sont constitués d'un monomère méthacrylique et le bloc central B représente de 50 à 85% en poids du copolymère total.

5. Application d'un copolymère triséquencé selon la revendication 4 à la fabrication d'articles élastomères.

6. Procédé de préparation d'un copolymère triséquencé selon la revendication 1, caractérisé en ce que :
(1) on conduit une polymérisation anionique d'au moins un monomère A, à l'aide d'un système initiateur constitué par au moins un amorceur monofonctionnel de formule :
(R)ₚ-M (I)
dans laquelle :
- M désigne un métal alcalin ou alcalino-terreux,
- p désigne la valence du métal M, et
- R désigne un radical alkyle à chaîne droite ou ramifiée contenant 2 à 6 atomes de carbone, ou un radical alkyle contenant 1 à 6 atomes de carbone substitué par au moins un groupe phényle,
et au moins un ligand choisi parmi les sels minéraux de métaux alcalins ou alcalino-terreux et les sels organiques des métaux alcalins, ces derniers étant choisis parmi les alcoolates, les esters d'acides carboxyliques substitués en position α par ledit métal et les composés dans lesquels ledit métal est associé à un groupe choisi parmi :
(A) les groupes de formule : 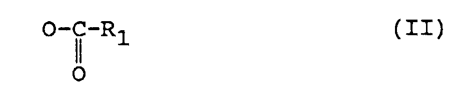 dans laquelle R₁ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,
(B) les groupes de formule : 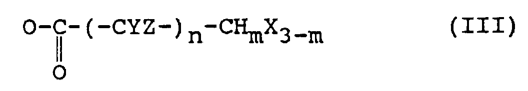 dans laquelle :
- Y et Z, identiques ou différents l'un de l'autre, sont choisis parmi l'atome d'hydrogène et les atomes d'halogène ;
- n est un nombre entier allant de 0 à 4,
- X est un atome d'halogène, et
- m est un nombre entier allant de 0 à 2,
(C) les groupes de formule :
O-SO₂-CT₃ (IV)
dans laquelle T est choisi parmi l'atome d'hydrogène et les atomes d'halogène, et
(D) les groupes de formule :
B(R₂)₄ (V)
dans laquelle R₂ est choisi parmi l'atome d'hydrogène et les radicaux alkyle et aryle,
pour obtenir un chaînon vivant A⁻ puis
(2) on fait réagir ledit chaînon vivant avec au moins un monomère B pour obtenir un copolymère biséquencé vivant (A-B)⁻, puis
(3) on fait réagir ledit copolymère (A-B)⁻ avec au moins un monomère C pour former un copolymère triséquencé vivant (A-B-C)⁻, et enfin
(4) on fait réagir le copolymère (A-B-C)⁻ avec au moins un composé protolytique,
les étapes de polymérisation (1) à (3) étant effectuées en l'absence substantielle d'humidité et d'oxygène, un monomère vinylaromatique ne pouvant dans ce cas n'être engagé qu'en tant que monomère A.

7. Procédé de préparation d'un copolymère triséquencé selon la revendication 2, caractérisé en ce que :
(1) on effectue la polymérisation anionique d'au moins un monomère B à l'aide d'un système initiateur constitué par au moins un amorceur bifonctionnel et au moins un ligand tel que défini à la revendication 6, pour obtenir un polymère vivant ⁻B⁻, puis
(2) on fait réagir ledit polymère ⁻B⁻ avec au moins un monomère A pour former un copolymère triséquencé vivant ⁻(A-B-A)⁻, et enfin
(3) on fait réagir le copolymère ⁻(A-B-A)⁻ avec au moins un composé protolytique,
les étapes de polymérisation (1) et (2) étant effectuées en l'absence substantielle d'humidité et d'oxygène, un monomère vinylaromatique ne pouvant dans ce cas n'être engagé qu'en tant que monomère B.

8. Procédé selon l'une des revendications 6 et 7, caractérisé en ce que le ligand est utilisé dans un rapport molaire allant de 0,3 jusqu'à 15 vis-à-vis de l'amorceur.

9. Procédé selon l'une des revendications 6 à 8, caractérisé en ce que la polymérisation s'effectue en présence d'au moins un solvant.

10. Procédé selon l'une des revendications 6 à 9, caractérisé en ce que la polymérisation s'effectue à une température de -78°C à +20°C.

## Revendications (Revendications pour l'(les) Etat(s) contractant(s) suivant(s): ES)

1. Procédé de préparation d'un copolymère triséquencé possédant un poids moléculaire moyen en nombre allant de 3 000 à 300 000 et une polydispersité des poids moléculaires allant de 1,05 à 2,0, de structure A-B-C dans laquelle le bloc A représente une séquence de monomère choisi parmi les classes des monomères méthacryliques, acryliques, vinylaromatiques et maléimides, le bloc B représente une séquence de monomère choisi parmi les classes des monomères méthacryliques, acryliques et vinylaromatiques, et le bloc C représente une séquence de monomère choisi parmi les classes des monomères méthacryliques, acryliques et maléimides, à la condition que ce bloc B dérive de monomères appartenant à une classe différente de celle des monomères formant les blocs A et C et qu'au moins un des blocs A, B ou C soit une séquence acrylique ou méthacrylique, B ne pouvant représenter une séquence vinylaromatique si A et C sont des séquences de monomères différents l'un de l'autre, caractérisé en ce que :
(1) on conduit une polymérisation anionique d'au moins un monomère A, à l'aide d'un système initiateur constitué par au moins un amorceur monofonctionnel de formule :
(R)ₚ-M (I)
dans laquelle :
- M désigne un métal alcalin ou alcalino-terreux,
- p désigne la valence du métal M, et
- R désigne un radical alkyle à chaîne droite ou ramifiée contenant 2 à 6 atomes de carbone, ou un radical alkyle contenant 1 à 6 atomes de carbone substitué par au moins un groupe phényle,
et au moins un ligand choisi parmi les sels minéraux de métaux alcalins ou alcalino-terreux et les sels organiques des métaux alcalins, ces derniers étant choisis parmi les alcoolates, les esters d'acides carboxyliques substitués en position α par ledit métal et les composés dans lesquels ledit métal est associé à un groupe choisi parmi :
(A) les groupes de formule : 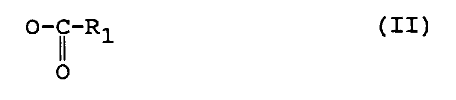 dans laquelle R₁ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,
(B) les groupes de formule : 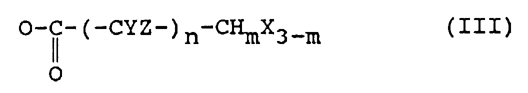 dans laquelle :
- Y et Z, identiques ou différents l'un de l'autre, sont choisis parmi l'atome d'hydrogène et les atomes d'halogène ;
- n est un nombre entier allant de 0 à 4,
- X est un atome d'halogène, et
- m est un nombre entier allant de 0 à 2,
(C) les groupes de formule :
O-SO₂-CT₃ (IV)
dans laquelle T est choisi parmi l'atome d'hydrogène et les atomes d'halogène, et
(D) les groupes de formule :
B(R₂)₄ (IV)
dans laquelle R₂ est choisi parmi l'atome d'hydrogène et les radicaux alkyle et aryle,
pour obtenir un chaînon vivant A⁻ puis
(2) on fait réagir ledit chaînon vivant avec au moins un monomère B pour obtenir un copolymère biséquencé vivant (A-B)⁻, puis
(3) on fait réagir ledit copolymère (A-B)⁻ avec au moins un monomère C pour former un copolymère triséquencé vivant (A-B-C)⁻, et enfin
(4) on fait réagir le copolymère (A-B-C)⁻ avec au moins un composé protolytique,
les étapes de polymérisation (1) à (3) étant effectuées en l'absence substantielle d'humidité et d'oxygène, un monomère vinylaromatique ne pouvant dans ce cas n'être engagé qu'en tant que monomère A.

2. Procédé de préparation d'un copolymère triséquencé tel que défini à la revendication 1, les blocs A et C étant de nature identique, caractérisé en ce que :
(1) on effectue la polymérisation anionique d'au moins un monomère B à l'aide d'un système initiateur constitué par au moins un amorceur bifonctionnel et au moins un ligand tel que défini à la revendication 1, pour obtenir un polymère vivant ⁻B⁻, puis
(2) on fait réagir ledit polymère ⁻B⁻ avec au moins un monomère A pour former un copolymère triséquencé vivant ⁻(A-B-A)⁻, et enfin
(3) on fait réagir le copolymère ⁻(A-B-A)⁻ avec au moins un composé protolytique,
les étapes de polymérisation (1) et (2) étant effectuées en l'absence substantielle d'humidité et d'oxygène, un monomère vinylaromatique ne pouvant dans ce cas n'être engagé qu'en tant que monomère B.

3. Procédé selon la revendication 2, caractérisé en ce que l'on prépare un copolymère dont le bloc central B représente de 10 à 99% en poids du copolymère total.

4. Procédé selon la revendication 3, caractérisé en ce que l'on prépare un copolymère dont le bloc central B est constitué d'un monomère acrylique, les blocs terminaux A sont constitués d'un monomère méthacrylique et le bloc central B représente de 50 à 85% en poids du copolymère total.

5. Procédé selon l'une des revendications 1 à 4, caractérisé en ce que l'on utilise le ligand dans un rapport molaire allant de 0,3 jusqu'à 15 vis-à-vis de l'amorceur.

6. Procédé selon l'une des revendications 1 à 5, caractérisé en ce que l'on conduit la polymérisation en présence d'au moins un solvant.

7. Procédé selon l'une des revendications 1 à 6, caractérisé en ce que l'on conduit la polymérisation à une température de -78°C à +20°C.

8. Procédé de fabrication d'articles élastomères à partir d'un copolymère triséquencé obtenu par le procédé tel que défini à la revendication 4.

## Patentansprüche (Patentansprüche für folgende(n) Vertragsstaat(en): AT, BE, CH, DE, DK, FR, GB, GR, IT, LI, LU, NL, SE)

1. Dreiblock-Copolymer mit einem zahlenmittleren Molekulargewicht zwischen 3.000 und 300.000, einer Polydispersität der Molekulargewichte zwischen 1,05 und 2,0 und einer Struktur A-B-C, in der der Block A eine Monomersequenz darstellt, ausgewählt aus methacrylischen, acrylischen, vinylaromatischen und maleinimidischen Monomeren, der Block B eine Monomersequenz darstellt, ausgewählt aus methacrylischen, acrylischen und vinylaromatischen Monomeren, und der Block C eine Monomersequenz darstellt, ausgewählt aus methacrylischen, acrylischen und maleinimidischen Monomeren, unter der Bedingung, daß der Block B sich von Monomeren ableitet, die zu einer Klasse gehören, die sich von der Klasse der die Blöcke A und C bildenden Monomere unterscheidet, und daß mindestens einer der Blöcke A, B oder C eine acrylische oder methacrylische Sequenz aufweist, wobei B keine vinylaromatische Sequenz darstellen kann, wenn A und C voneinander verschiedene Monomersequenzen darstellen.

2. Dreiblock-Copolymer nach Anspruch 1, dadurch gekennzeichnet, daß die Blöcke A und C identischer Natur sind.

3. Dreiblock-Copolymer nach Anspruch 2, dadurch gekennzeichnet, daß der zentrale Block B 10 bis 99 Gew.-% des gesamten Copolymers darstellt.

4. Dreiblock-Copolymer nach Anspruch 3, dadurch gekennzeichnet, daß der zentrale Block B aus einem acrylischen Monomer besteht, die endständigen Blöcke A aus einem methacrylischen Monomer gebildet sind und der zentrale Block B 50 bis 85 Gew.-% des gesamten Copolymers darstellt.

5. Verwendung eines Dreiblock-Copolymers nach Anspruch 4 zur Herstellung von elastomeren Gegenständen.

6. Verfahren zur Herstellung eines Dreiblock-Copolymers nach Anspruch 1, dadurch gekennzeichnet, daß:
(1) man eine anionische Polymerisation mindestens eines Monomers A mit Hilfe eines Initiatorsystems durchführt, bestehend aus mindestens einem monofunktionellen Starter der Formel:
(R)ₚ-M (I)
in der:
- M ein Alkali- oder Erdalkalimetall darstellt;
- p die Valenz des Metalls M darstellt; und
- R einen linearen oder verzweigten Alkylrest mit 2 bis 6 Kohlenstoffatomen oder einen mit mindestens einer Phenylgruppe substituierten Alkylrest mit 1 bis 6 Kohlenstoffatomen darstellt;
und aus mindestens einem Liganden, ausgewählt aus anorganischen Alkali- oder Erdalkalisalzen und organischen Alkalisalzen, wobei letztere ausgewählt sind aus Alkoholaten, Estern von in α-Position mit diesem Metall substituierten Carbonsäuren und Verbindungen, in denen dieses Metall assoziiert ist mit einer Gruppe, ausgewählt aus:
(A) Gruppen der Formel: 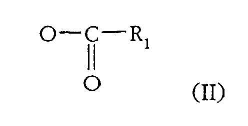 in der R₁ einen linearen oder verzweigten Alkylrest mit 1 bis 20 Kohlenstoffatomen oder auch einen Cycloalkylrest mit 3 bis 20 Kohlenstoffatomen oder auch einen Arylrest mit 6 bis 14 Kohlenstoffatomen darstellt;
(B) Gruppen der Formel: 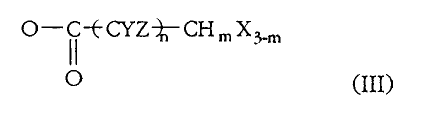 in der:
- Y und Z, identisch oder verschieden, jeweils ausgewählt sind aus einem Wasserstoffatom oder Halogenatomen;
- n eine ganze Zahl zwischen 0 und 4 darstellt;
- X ein Halogenatom darstellt; und
- m eine ganze Zahl zwischen 0 und 2 darstellt;
(C) Gruppen der Formel:
O-SO₂-CT₃ (IV)
in der T ausgewählt ist aus einem Wasserstoffatom und Halogenatomen; und
(D) Gruppen der Formel:
B(R₂)₄ (V)
in der R₂ ausgewählt ist aus einem Wasserstoffatom und den Alkyl- und Arylresten;
um eine lebende Kette A⁻ zu erhalten;
(2) man dann diese lebende Kette mit mindestens einem Monomer B reagieren läßt, um ein lebendes Zweiblock-Copolymer (A-B)⁻ zu erhalten;
(3) man dann dieses Copolymer (A-B)⁻ mit mindestens einem Monomer C reagieren läßt, um ein lebendes Dreiblock-Copolymer (A-B-C)⁻ zu erhalten;
(4) und man schließlich das Copolymer (A-B-C)⁻ mit mindestens einer protolytischen Verbindung reagieren läßt;
wobei die Polymerisationsschritte (1) bis (3) im wesentlichen unter Ausschluß von Feuchtigkeit und Sauerstoff durchgeführt werden und in diesem Fall nur ein vinylaromatisches Monomer als Monomer (A) eingesetzt werden kann.

7. Verfahren zur Herstellung eines Dreiblock-Copolymers nach Anspruch 2, dadurch gekennzeichnet, daß:
(1) man die anionische Polymerisation mindestens eines Monomers B mit Hilfe eines Initiatorsystems durchführt, das aus mindestens einem bifunktionellen Starter und mindestens einem wie in Anspruch 6 definierten Liganden besteht, um ein lebendes Polymer ⁻B⁻ zu erhalten;
(2) man dann dieses Polymer ⁻B⁻ mit mindestens einem Monomer A reagieren läßt, um ein lebendes Dreiblock-Copolymer ⁻(A-B-A)⁻ zu erhalten;
(3) man schließlich das Copolymer ⁻(A-B-A)⁻ mit mindestens einer protolytischen Verbindung reagieren läßt;
wobei die Polymerisationsschritte (1) und (2) im wesentlichen unter Ausschluß von Feuchtigkeit und Sauerstoff durchgeführt werden und in diesem Fall nur ein vinylaromatisches Monomer als Monomer B eingesetzt werden kann.

8. Verfahren nach einem der Ansprüche 6 und 7, dadurch gekennzeichnet, daß der Ligand in einem Molverhältnis zwischen 0,3 bis 15 eingesetzt wird, bezogen auf den Starter.

9. Verfahren nach einem der Ansprüche 6 bis 8, dadurch gekennzeichnet, daß die Polymerisation in Gegenwart mindestens eines Lösemittels durchgeführt wird.

10. Verfahren nach einem der Ansprüche 6 bis 9, dadurch gekennzeichnet, daß die Polymerisation bei einer Temperatur zwischen -78 und +20 °C durchgeführt wird.

## Patentansprüche (Patentansprüche für folgende(n) Vertragsstaat(en): ES)

1. Verfahren zur Herstellung eines Dreiblock-Copolymers mit einem zahlenmittleren Molekulargewicht zwischen 3.000 und 300.000, einer Polydispersität der Molekulargewichte zwischen 1,05 und 2,0 und einer Struktur A-B-C, in der der Block A eine Monomersequenz darstellt, ausgewählt aus methacrylischen, acrylischen, vinylaromatischen und maleinimidischen Monomeren, der Block B eine Monomersequenz darstellt, ausgewählt aus methacrylischen, acrylischen und vinylaromatischen Monomeren, und der Block C eine Monomersequenz darstellt, ausgewählt aus methacrylischen, acrylischen und maleinimidischen Monomeren, unter der Bedingung, daß der Block B sich von Monomeren ableitet, die zu einer Klasse gehören, die sich von der Klasse der die Blöcke A und C bildenden Monomere unterscheidet, und daß mindestens einer der Blöcke A, B oder C eine acrylische oder methacrylische Sequenz aufweist, wobei B keine vinylaromatische Sequenz darstellen kann, wenn A und C voneinander verschiedene Monomersequenzen darstellen, dadurch gekennzeichnet, daß:
(1) man eine anionische Polymerisation mit mindestens eines Monomers A mit Hilfe eines Initiatorsystems durchführt, bestehend aus mindestens einem monofunktionellen Starter der Formel:
(R)ₚ-M (I)
in der:
- M ein Alkali- oder Erdalkalimetall darstellt;
- p die Valenz des Metalls M darstellt; und
- R einen linearen oder verzweigten Alkylrest mit 2 bis 6 Kohlenstoffatomen oder einen mit mindestens einer Phenylgruppe substituierten Alkylrest mit 1 bis 6 Kohlenstoffatomen darstellt;
und aus mindestens einem Liganden, ausgewählt aus anorganischen Alkali- oder Erdalkalisalzen und organischen Alkalisalzen, wobei letztere ausgewählt sind aus Alkoholaten, Estem von in α-Position mit diesem Metall substituierten Carbonsäuren und Verbindungen, in denen dieses Metall assoziiert ist mit einer Gruppe, ausgewählt aus:
(A) Gruppen der Formel: 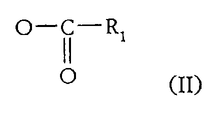 in der R₁ einen linearen oder verzweigten Alkylrest mit 1 bis 20 Kohlenstoffatomen oder auch einen Cycloalkylrest mit 3 bis 20 Kohlenstoffatomen oder auch einen Arylrest mit 6 bis 14 Kohlenstoffatomen darstellt;
(B) Gruppen der Formel: 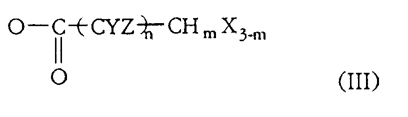 in der:
- Y und Z, identisch oder verschieden, jeweils ausgewählt sind aus einem Wasserstoffatom oder Halogenatomen;
- n eine ganze Zahl zwischen 0 und 4 darstellt;
- X ein Halogenatom darstellt; und
- m eine ganze Zahl zwischen 0 und 2 darstellt;
(C) Gruppen der Formel:
O-SO₂-CT₃ (IV)
in der T ausgewählt ist aus einem Wasserstoffatom und Halogenatomen; und
(D) Gruppen der Formel:
B(R₂)₄ (V)
in der R₂ ausgewählt ist aus einem Wasserstoffatom und Alkyl- und Arylresten;
um eine lebende Kette A⁻ zu erhalten;
(2) man dann diese lebende Kette mit mindestens einem Monomer B reagieren läßt, um ein lebendes Zweiblock-Copolymer (A-B)⁻ zu erhalten;
(3) man dann dieses Copolymer (A-B)⁻ mit mindestens einem Monomer C reagieren läßt, um ein lebendes Dreiblock-Copolymer (A-B-C)⁻ zu erhalten;
(4) und man schließlich das Copolymer (A-B-C)⁻ mit mindestens einer protolytischen Verbindung reagieren läßt;
wobei die Polymerisationsschritte (1) bis (3) im wesentlichen unter Ausschluß von Feuchtigkeit und Sauerstoff durchgeführt werden und in diesem Fall nur ein vinylaromatisches Monomer als Monomer (A) eingesetzt werden kann.

2. Verfahren zur Herstellung eines Dreiblock-Copolymers nach Anspruch 1, wobei die Blöcke A und C identischer Natur sind, dadurch gekennzeichnet, daß:
(1) man die anionische Polymerisation mindestens eines Monomers B mit Hilfe eines Initiatorsystems durchführt, das aus mindestens einem bifunktionellen Starter und mindestens einem wie in Anspruch 1 definierten Liganden besteht, um ein lebendes Polymer ⁻B⁻ zu erhalten;
(2) man dann dieses Polymer ⁻B⁻ mit mindestens einem Monomer A reagieren läßt, um ein lebendes Dreiblock-Copolymer ⁻(A-B-A)⁻ zu erhalten;
(3) man schließlich das Copolymer ⁻(A-B-A)⁻ mit mindestens einer protolytischen Verbindung reagieren läßt;
wobei die Polymerisationsschritte (1) und (2) im wesentlichen unter Ausschluß von Feuchtigkeit und Sauerstoff durchgeführt werden und in diesem Fall nur ein vinylaromatisches Monomer als Monomer B eingesetzt werden kann.

3. Verfahren nach Anspruch 2, dadurch gekennzeichnet, daß man ein Copolymer herstellt, dessen zentraler Block B 10 bis 99 Gew.-% des gesamten Copolymers darstellt.

4. Verfahren nach Anspruch 3, dadurch gekennzeichnet, daß man ein Copolymer herstellt, dessen zentraler Block B aus einem acrylischen Monomer besteht, dessen endständige Blöcke A aus einem methacrylischen Monomer bestehen und dessen zentraler Block B 50 bis 85 Gew.-% des gesamten Copolymers darstellt.

5. Verfahren nach einem der Ansprüche 1 bis 4, dadurch gekennzeichnet, daß der Ligand in einem Molverhältnis zwischen 0,3 bis 15 eingesetzt wird, bezogen auf den Starter.

6. Verfahren nach einem der Ansprüche 1 bis 5, dadurch gekennzeichnet, daß die Polymerisation in Gegenwart mindestens eines Lösemittels durchgeführt wird.

7. Verfahren nach einem der Ansprüche 1 bis 6, dadurch gekennzeichnet, daß die Polymerisation bei einer Temperatur zwischen -78 und +20 °C durchgeführt wird.

8. Verfahren zur Herstellung elastomerer Gegenstände aus einem Dreiblock-Copolymer, das durch das Verfahren nach Anspruch 4 erhalten wurde.

## Claims (Claims for the following Contracting State(s): AT, BE, CH, DE, DK, FR, GB, GR, IT, LI, LU, NL, SE)

1. Triblock copolymer which has a number-average molecular weight ranging from 3 000 to 300 000 and a molecular weight polydispersity ranging from 1.05 to 2.0, of A-B-C structure in which block A denotes a monomer sequence chosen from the classes of methacrylic, acrylic, vinylaromatic and maleimide monomers, block B denotes a monomer sequence chosen from the classes of methacrylic, acrylic and vinylaromatic monomers, and block C denotes a monomer sequence chosen from the classes of methacrylic, acrylic and maleimide monomers, on the condition that this block B is derived from monomers belonging to a class other than that of the monomers forming blocks A and C and that at least one of blocks A, B or C is an acrylic or methacrylic sequence, it not being possible for B to denote a vinylaromatic sequence if A and C are sequences of monomers which differ from each other.

2. Triblock copolymer according to Claim 1, characterized in that blocks A and C are of identical kind.

3. Triblock copolymer according to Claim 2, characterized in that the middle block B represents from 10 to 99 % by weight of the total copolymer.

4. Triblock copolymer according to Claim 3, characterized in that the middle block B consists of an acrylic monomer, the end blocks A consist of a methacrylic monomer and the middle block B represents from 50 to 85 % by weight of the total copolymer.

5. Application of a triblock copolymer according to Claim 4 to the manufacture of elastomeric articles.

6. Process for the preparation of a triblock copolymer according to Claim 1, characterized in that :
(1) an anionic polymerization of at least one monomer A is conducted with the aid of an initiating system consisting of at least one monofunctional initiator of formula :
(R)ₚ-M (I)
in which :
- M denotes an alkali or alkaline-earth metal,
- p denotes the valency of the metal M, and
- R denotes a straight- or branched-chain alkyl radical containing 2 to 6 carbon atoms, or an alkyl radical containing 1 to 6 carbon atoms, substituted by at least one phenyl group,
and at least one ligand chosen from inorganic alkali or alkaline-earth metal salts and organic alkali metal salts, the latter being chosen from alcoholates, esters of carboxylic acids substituted by the said metal in an α position and the compounds in which the said metal is associated with a group chosen from:
(A) the groups of formula: 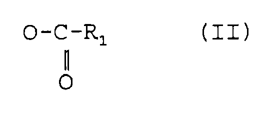 in which R₁ is a linear or branched alkyl radical containing from 1 to 20 carbon atoms or a cycloalkyl radical containing from 3 to 20 carbon atoms or an aryl radical containing from 6 to 14 carbon atoms,
(B) the groups of formula: 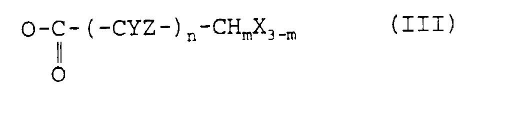 in which:
- Y and Z, which are identical or different from each other, are chosen from the hydrogen atom and halogen atoms;
- n is an integer ranging from 0 to 4,
- X is a halogen atom, and
- m is an integer ranging from 0 to 2,
(C) the groups of formula:
O-SO₂-CT₃ (IV)
in which T is chosen from the hydrogen atom and halogen atoms, and
(D) the groups of formula:
B(R₂)₄ (V)
in which R₂ is chosen from the hydrogen atom and alkyl and aryl radicals,
to obtain a living chain unit A⁻, then
(2) the said living chain unit is reacted with at least one monomer B to obtain a living diblock copolymer (A-B)⁻, then
(3) the said copolymer (A-B)⁻ is reacted with at least one monomer C to form a living triblock copolymer (A-B-C)⁻, and finally
(4) the copolymer (A-B-C)⁻ is reacted with at least one protolytic compound,
the polymerization stages (1) to (3) being performed in the substantial absence of moisture and of oxygen, it being possible in this case for a vinylaromatic monomer to be involved only as monomer A.

7. Process for the preparation of a triblock copolymer according to Claim 2, characterized in that:
(1) anionic polymerization of at least one monomer B is performed with the aid of an initiating system consisting of at least one difunctional initiator and at least one ligand as defined in Claim 6, to obtain a living polymer ⁻B⁻, then
(2) the said polymer ⁻B⁻ is reacted with at least one monomer A to form a living triblock copolymer ⁻(A-B-A)⁻, and finally
(3) the copolymer ⁻(A-B-A)⁻ is reacted with at least one protolytic compound,
the polymerization stages (1) and (2) being performed in the substantial absence of moisture and of oxygen, it being possible in this case for a vinylaromatic monomer to be involved only as monomer B.

8. Process according to either of Claims 6 and 7, characterized in that the ligand is employed in a molar ratio ranging from 0.3 up to 15 to the initiator.

9. Process according to one of Claims 6 to 8, characterized in that the polymerization takes place in the presence of at least one solvent.

10. Process according to one of Claims 6 to 9, characterized in that the polymerization is performed at a temperature of -78°C to +20°C.

## Claims (Claims for the following Contracting State(s): ES)

1. Process for the preparation of a triblock copolymer which has a number-average molecular weight ranging from 3 000 to 300 000 and a molecular weight polydispersity ranging from 1.05 to 2.0, of A-B-C structure in which block A denotes a monomer sequence chosen from the classes of methacrylic, acrylic, vinylaromatic and maleimide monomers, block B denotes a monomer sequence chosen from the classes of methacrylic, acrylic and vinylaromatic monomers, and block C denotes a monomer sequence chosen from the classes of methacrylic, acrylic and maleimide monomers, on the condition that this block B is derived from monomers belonging to a class other than that of the monomers forming blocks A and C and that at least one of blocks A, B or C is an acrylic or methacrylic sequence, it not being possible for B to denote a vinylaromatic sequence if A and C are sequences of monomers which differ from each other, characterized in that :
(1) an anionic polymerization of at least one monomer A is conducted with the aid of an initiating system consisting of at least one monofunctional initiator of formula :
(R)ₚ-M (I)
in which :
- M denotes an alkali or alkaline-earth metal,
- p denotes the valency of the metal M, and
- R denotes a straight- or branched-chain alkyl radical containing 2 to 6 carbon atoms, or an alkyl radical containing 1 to 6 carbon atoms, substituted by at least one phenyl group,
and at least one ligand chosen from inorganic alkali or alkaline-earth metal salts and organic alkali metal salts, the latter being chosen from alcoholates, esters of carboxylic acids substituted by the said metal in an α position and the compounds in which the said metal is associated with a group chosen from:
(A) the groups of formula: 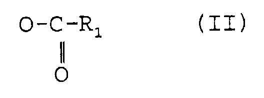 in which R₁ is a linear or branched alkyl radical containing from 1 to 20 carbon atoms or a cycloalkyl radical containing from 3 to 20 carbon atoms or an aryl radical containing from 6 to 14 carbon atoms,
(B) the groups of formula: 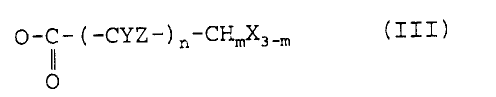 in which:
- Y and Z, which are identical or different from each other, are chosen from the hydrogen atom and halogen atoms;
- n is an integer ranging from 0 to 4,
- X is a halogen atom, and
- m is an integer ranging from 0 to 2,
(C) the groups of formula:
O-SO₂-CT₃ (IV)
in which T is chosen from the hydrogen atom and halogen atoms, and
(D) the groups of formula:
B(R₂)₄ (V)
in which R₂ is chosen from the hydrogen atom and alkyl and aryl radicals,
to obtain a living chain unit A⁻, then
(2) the said living chain unit is reacted with at least one monomer B to obtain a living diblock copolymer (A-B)⁻, then
(3) the said copolymer (A-B)⁻ is reacted with at least one monomer C to form a living triblock copolymer (A-B-C)⁻, and finally
(4) the copolymer (A-B-C)⁻ is reacted with at least one protolytic compound,
the polymerization stages (1) to (3) being performed in the substantial absence of moisture and of oxygen, it being possible in this case for a vinylaromatic monomer to be involved only as monomer A.

2. Process for the preparation of a triblock copolymer as defined in Claim 1, blocks A and C being of identical kind, characterized in that :
(1) anionic polymerization of at least one monomer B is performed with the aid of an initiating system consisting of at least one difunctional initiator and at least one ligand as defined in Claim 1, to obtain a living polymer ⁻B⁻, then
(2) the said polymer ⁻B⁻ is reacted with at least one monomer A to form a living triblock copolymer ⁻(A-B-A)⁻, and finally
(3) the copolymer ⁻(A-B-A)⁻ is reacted with at least one protolytic compound,
the polymerization stages (1) and (2) being performed in the substantial absence of moisture and of oxygen, it being possible in this case for a vinylaromatic monomer to be involved only as monomer B.

3. Process according to Claim 2, characterized in that a copolymer is prepared in which the middle block B represents from 10 to 99 % by weight of the total copolymer.

4. Process according to Claim 3, characterized in that a copolymer is prepared in which the middle block B consists of an acrylic monomer, the end blocks A consist of a methacrylic monomer and the middle block B represents from 50 to 85 % by weight of the total copolymer.

5. Process according to one of Claims 1 to 4, characterized in that the ligand is employed in a molar ratio ranging from 0.3 up to 15 to the initiator.

6. Process according to one of Claims 1 to 5, characterized in that the polymerization is conducted in the presence of at least one solvent.

7. Process according to one of Claims 1 to 6, characterized in that the polymerization is conducted at a temperature of -78°C to +20°C.

8. Process for the manufacture of elastomeric articles from a triblock copolymer obtained by the process as defined in Claim 4.
